(19) **Europäisches Patentamt / European Patent Office / Office européen des brevets**

(11) **EP 4 158 285 B1**

(12) **EUROPÄISCHE PATENTSCHRIFT**

(45) Veröffentlichungstag und Bekanntmachung des Hinweises auf die Patenterteilung:
**15.01.2025 Patentblatt 2025/03**

(21) Anmeldenummer: **21722165.4**

(22) Anmeldetag: **23.04.2021**

(51) Internationale Patentklassifikation (IPC):
**G01F 1/7084** *(2022.01)* **G01F 25/10** *(2022.01)*
**G01F 1/698** *(2006.01)* **G01F 1/704** *(2006.01)*
**G01F 1/712** *(2006.01)*

(52) Gemeinsame Patentklassifikation (CPC):
**G01F 1/6986; G01F 1/7044; G01F 1/7084;
G01F 25/10;** G01F 1/712

(86) Internationale Anmeldenummer:
**PCT/EP2021/060729**

(87) Internationale Veröffentlichungsnummer:
**WO 2021/239349 (02.12.2021 Gazette 2021/48)**

(54) **THERMISCHER STRÖMUNGSSENSOR UND VERFAHREN ZUM BETREIBEN DESSELBEN**

THERMAL FLOW SENSOR AND METHOD FOR OPERATING SAME

CAPTEUR DE FLUX THERMIQUE ET SON PROCÉDÉ D'EXPLOITATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.05.2020 DE 102020114487**

(43) Veröffentlichungstag der Anmeldung:
**05.04.2023 Patentblatt 2023/14**

(73) Patentinhaber: **Innovative Sensor Technology IST AG**
**9642 Ebnat-Kappel (CH)**

(72) Erfinder:
- **BERNHARDGRÜTTER, Ralf Emanuel**
  **8583 Sulgen (CH)**
- **HEPP, Christoph**
  **9500 Wil (CH)**

(74) Vertreter: **Trenkle, Dennis**
**Endress + Hauser Group Services
(Deutschland) AG+Co. KG
Colmarer Straße 6
79576 Weil am Rhein (DE)**

(56) Entgegenhaltungen:
**EP-A1- 3 106 851**

- **BADARLIS ANASTASIOS ET AL: "Measurement of Gas Thermal Properties Using the Parametric Reduced-Order Modeling Approach", IEEE SENSORS JOURNAL, IEEE SERVICE CENTER, NEW YORK, NY, US, vol. 16, no. 12, 15 June 2016 (2016-06-15), pages 4704 - 4714, XP011610625, ISSN: 1530-437X, [retrieved on 20160517], DOI: 10.1109/JSEN.2016.2558820**

**Beschreibung**

Die Erfindung betrifft ein Verfahren zum Betreiben eines thermischen Strömungssensors, wobei der thermische Strömungssensor zumindest ein Sensorelement und eine Elektronikeinheit aufweist. Des Weiteren betrifft die Erfindung einen thermischen Strömungssensor, welcher dazu ausgestaltet ist, mittels des erfindungsgemäßen Verfahrens betrieben zu werden.

Zur Bestimmung eines Durchflusses, bzw. der Strömungsgeschwindigkeit eines Messmediums, bzw. eines Fluides, beispielsweise eines Gases, Gasgemisches oder einer Flüssigkeit, sind thermische Strömungssensoren bekannt. Diese nutzen aus, dass ein (strömendes) Messmedium Wärme von einer beheizten Fläche abtransportiert. Thermische Strömungssensoren bestehen typischerweise aus mehreren Funktionselementen, üblicherweise zumindest aus einem niederohmigen Heizelement und einem hochohmigen Widerstandselement, welches als Temperatursensor dient. Alternativ sind thermische Strömungssensoren mit mehreren niederohmigen Heizelementen als Heizer und Temperatursensor aufgebaut.

Kalorimetrische thermische Strömungssensoren bestimmen über eine Temperaturdifferenz zwischen zwei Temperatursensoren, welche flussabwärts (engl. "downstream") und flussaufwärts (engl. "upstream") von einem Heizelement angeordnet sind, den Durchfluss bzw. die Flussrate des Fluids in einem Kanal. Hierzu wird ausgenutzt, dass die Temperaturdifferenz bis zu einem gewissen Punkt linear zu dem Durchfluss bzw. der Flussrate ist. Dieses Verfahren bzw. die Methode ist in der einschlägigen Literatur ausgiebig beschrieben.

Anemometrische thermische Strömungssensoren bestehen aus zumindest einem Heizelement, welches während der Messung des Durchflusses erhitzt wird. Durch die Umströmung des Heizelements mit dem Messmedium findet ein Wärmetransport in das Messmedium statt, der sich mit der Strömungsgeschwindigkeit verändert. Durch Messung der elektrischen Größen des Heizelements kann auf die Strömungsgeschwindigkeit des Messmediums geschlossen werden. Ein solcher anemometrischer thermischer Strömungssensor wird typischerweise in einem der folgenden beiden Regelarten betrieben:

Bei der Regelart "Constant-Current Anemometry" (CCA) wird das Heizelement mit einem konstanten Strom beaufschlagt. Durch die Umströmung mit dem Messmedium ändert sich der Widerstand des Heizelements und damit die am Heizelement abfallende Spannung, welche das Messsignal darstellt. Analog dazu funktioniert die Regelart "Constant-Voltage Anemometry" (CVA), bei welcher das Heizelement mit einer konstanten Spannung beaufschlagt wird.

Bei der Regelart "Constant-Temperature Anemometry (CTA)" wird das Heizelement auf einer im Mittel konstanten Temperatur gehalten. Mittels dieser Regelart sind relativ hohe Strömungsgeschwindigkeiten messbar. Je nach Strömungsgeschwindigkeit wird mehr oder weniger Wärme durch das fließende Messmedium abtransportiert und es muss entsprechend mehr oder weniger elektrische Leistung nachgeführt werden, um die Temperatur konstant zu halten. Diese nachgeführte elektrische Leistung ist ein Maß für die Strömungsgeschwindigkeit des Messmediums.

Die abtransportierte Wärme bei anemometrischen oder kalorimetrischen thermischen Strömungssensoren ist jedoch von thermischen Parametern des Messmediums abhängig - in erster Linie sind dies die Wärmeleitfähigkeit und die Wärmekapazität des Messmediums. Demzufolge muss der thermische Strömungssensor vorab in einer speziellen Kalibrationseinrichtung für ein spezifisches Messmedium kalibriert werden. Wechselt das Messmedium, so muss der thermische Strömungssensor von Neuem in der Kalibrationseinrichtung kalibriert werden bevor dieser wieder richtige Werte ausgibt.

Es existieren bereits Messprinzipansätze von Membranströmungssensoren für Gas, die in einem ersten Schritt Wärmeleitfähigkeit und Wärmekapazität messen (mittels konstanter Leistung oder Wechselstrom-getrieben) und diese Information in der Messung der Strömungsgeschwindigkeit zur Kompensation der Fluidabhängigkeit in einem zweiten Schritt nutzen. Oftmals werden aber gewisse Informationen über die Eigenschaft des Gases a priori benötigt, damit diese Selbstkalibrierung funktionieren kann.

Des Weiteren müssen die Wärmeleitfähigkeit und die Wärmekapazität des Messmediums oft getrennt gemessen werden, bzw. bekannt sein. Diese getrennte Bestimmung erfordert häufig auch unterschiedliche Messbedingungen, bzw. Messsequenzen, was eine Durchführung aufwendiger macht, das heißt, es können mehrere Schritte, unterschiedliche Sensoren und Elektronikkomponenten benötigt werden. Eine derart aufwendige Umsetzung kann oft zu höheren Produktionskosten und somit auch zu höheren Preisen führen.

Die EP 3 106 851 A1 offenbart einen Temperatursensor, mit dessen Hilfe thermische Eigenschaften eines Fluids bestimmt werden können, insbesondere dessen Wärmekapazität und dessen Wärmeleitfähigkeit. Hierfür misst der Temperatursensor die Verläufe der Temperaturamplitude und die Phasenverschiebung und führt diese einem parametrischen Modell reduzierter Ordnung zu, welches die Wärmekapazität und/oder dessen Wärmeleitfähigkeit und die Wärmekapazität als Ergebnis liefert.

Ausgehend von dieser Problematik liegt der Erfindung die Aufgabe zugrunde, ein Verfahren vorzustellen, welche eine Kalibration eines Sensors auf ein spezifisches Messmedium erlaubt, ohne dass Eigenschaften des Messmediums a priori bekannt sind.

Die Aufgabe wird durch ein Verfahren zum Betreiben eines thermischen Strömungssensors gelöst, wobei der

EP 4 158 285 B1

thermische Strömungssensor zumindest ein Sensorelement und eine Elektronikeinheit aufweist, umfassend:

- In thermischen Kontakt Bringen eines Messmediums mit dem Sensorelement und periodisches Erwärmen des Messmediums mittels einer in das Sensorelement eingebrachten Wechselspannung, wobei simultan eine Maximalamplitude eines Verlaufs der Temperatur und/oder einer Phasenverschiebung zwischen dem Verlauf der Wechselspannung und dem Verlauf der Temperatur erfasst;
- Anpassen der erfassten Maximalamplitude und/oder der erfassten Phasenverschiebung mithilfe von Kalibrierdaten;
- Bestimmen einer Isolinie anhand der angepassten Maximalamplitude und/oder der angepassten Phasenverschiebung auf Basis eines mathematischen, bzw. physikalischen, Modells des thermischen Strömungssensors, wobei die Isolinie einer Vielzahl von Wertepaaren thermischer Parameter, insbesondere eine Wärmeleitfähigkeit und eine Wärmekapazität, des Messmediums aufweist, welche Wertepaare mit derselben Maximalamplitude, bzw. derselben Phasenverschiebung, assoziiert sind;
- Ableiten von zumindest einer Messfluidinformation aus der Isolinie; und
- Durchführen einer Strömungsmessung mittels des thermischen Strömungssensors, wobei das Sensorelement Signalwerte liefert, und Umwandeln der Signalwerte in Messwerte der effektiven Strömungsgeschwindigkeit des Messmediums mittels der Messfluidinformation.

Der Vorteil des erfindungsgemäßen Verfahrens besteht darin, dass gegenüber konventionellen Betriebsverfahren thermischer Strömungssoren die Abhängigkeit der gemessenen Strömungsgeschwindigkeit von dem Messmedium direkt kompensiert werden kann. Hierfür wird eine sogenannte "3-Omega-Methode" verwendet, mittels welcher eine Maximalamplitude und/oder eine Phasenverschiebung ermittelt wird. Diese Werte werden mittels Kalibrierwerten, welche insbesondere herstellerseitig ermittelt werden, kompensiert. Anschließend wird eine sogenannte "Isolinie" der Wärmekapazität und der Wärmeleitfähigkeit bestimmt. Eine Isolinie stellt diejenigen Wertepaare der Wärmekapazität und der Wärmeleitfähigkeit dar, für welche die gemessene und kompensierte Maximalamplitude, bzw. Phasenverschiebung gleich ist. Dies kann für mehrere verschiedene Messmedien gelten, so dass nicht das Messmedium selbst bestimmt werden muss, sondern nur das zugrundeliegende Verhalten dessen bezogen auf die Isolinie.

Das verwendete Modell zur Bestimmung der Isolinie beruht hierbei für der Wärmeleitgleichung. Diese Isolinie lässt sich in ein zweites Modell einspeisen, welches zur Umwandlung der Signalwerte in Messwerte der Strömungsgeschwindigkeit verwendet wird. Eine genauere Erläuterung folgt in der Figurenbeschreibung. Da nicht das Messmedium selbst bestimmt werden muss - und hierfür jeweils dessen Wärmekapazität und Wärmeleitfähigkeit - ist das erfindungsgemäße Verfahren im Gegensatz zu den bekannten Verfahren vorteilhaft hinsichtlich Aufwands und Kosten.

Der Begriff "Strömungsgeschwindigkeit" umfasst ebenso den Volumenstrom eines Messmediums.

Gemäß einer vorteilhaften Ausgestaltung des erfindungsgemäßen Verfahrens ist vorgesehen, dass die Kalibrierdaten vorab mit einem bekannten Messmedium mit einem definierten Wertepaar thermischer Parameter, insbesondere Wasser, bestimmt werden, wobei das Bestimmen der Kalibrierdaten ein Erfassen einer Referenzmaximalamplitude eines Verlaufs der Temperatur und/oder einer Referenzphasenverschiebung zwischen dem Verlauf der Wechselspannung und dem Verlauf der Temperatur umfasst. Auch Hierfür wird eine sogenannte "3-Omega-Methode" verwendet, mittels welcher die Referenzwerte ermittelt werden.

Gemäß einer vorteilhaften Ausgestaltung des erfindungsgemäßen Verfahrens ist vorgesehen, dass für das Erfassen der Maximalamplitude und/oder der Phasenverschiebung und für das Bestimmen der Kalibierdaten eine Strömungsgeschwindigkeit des Messmediums von Null vorliegt. Es können auch Bedingungen vorliegen, bei denen die Strömungsgeschwindigkeit des Messmediums ungleich Null beträgt. Das Bestimmen der Isolinie ist dann jedoch ungleich komplexer, bzw. aufwendiger.

Das Bestimmen der Kalibrierdaten kann auch eine Zwei-Punktekalibrierung umfassen. Beispielsweise wird hierbei eine Messung bei der beschriebenen Strömungsgeschwindigkeit von Null und eine Messung bei einem endlichen Strömungswert durchgeführt.

Gemäß einer vorteilhaften Ausgestaltung des erfindungsgemäßen Verfahrens ist vorgesehen, dass die Kalibrierdaten in der Elektronikeinheit gespeichert werden. Wie obig beschrieben, werden die Kalibrierdaten bevorzugt herstellerseitig bestimmt. Damit der Kunde, bzw. der Benutzer, die nachfolgenden Schritte des Verfahrens kundenseitig, bzw. anwenderseitig, durchführen kann, muss diesem die Kalibrierdaten zur Verfügung gestellt werden. Es ist daher vorgesehen, diese Kalibrierdaten direkt in die Elektronikeinheit des thermischen Strömungssensors zu speichern, woraufhin diese vom Kunden, bzw. vom Benutzer, ausgelesen werden kann.

Gemäß einer vorteilhaften Ausgestaltung des erfindungsgemäßen Verfahrens ist vorgesehen, dass die Strömungsmessung mittels eines Constant-Temperature-Anemometry-Verfahrens durchgeführt wird. Wie obig beschrieben wird ein Heizelement des thermischen Strömungssensor mit einem konstanten Strom beaufschlagt. Durch die Umströmung mit dem Messmedium ändert sich der Widerstand des Heizelements und damit die am Heizelement abfallende Spannung, welche das Messsignal darstellt.

Gemäß einer vorteilhaften Ausgestaltung des erfindungsgemäßen Verfahrens ist vorgesehen, dass die Schritte des Bestimmens der Isolinie und das Ableiten der Messfluidinformation aus der Isolinie wiederholt werden, im Falle, dass eine oder mehrere der folgenden Fälle eintreten:

- Ein Wechsel, bzw. eine Änderung, des Messmediums;
- Überprüfung des Sensorelements bzgl. Verunreinigungen;
- Veränderung der Zusammensetzung des Messmediums, insbesondere durch Zersetzung des Messmediums.

Hierbei handelt es sich um Situationen, welche im laufenden Betrieb auftreten und für welche der thermische Strömungssensor nicht zum Hersteller zurückgeschickt werden muss. In anderen Worten bleiben also die Kalibrierdaten weiterhin gültig, so dass lediglich das Verhalten zwischen dem thermischen Strömungssensor und dem Messmedium durch das Bestimmen einer neuen Isolinie neu bewertet werden muss.

Gemäß einer vorteilhaften Ausgestaltung des erfindungsgemäßen Verfahrens ist vorgesehen, dass die Schritte des Bestimmens der Kalibrierdaten, des Bestimmens der Isolinie und des Ableitens der Messfluidinformation aus der Isolinie wiederholt werden, im Falle, dass ein Defekt des thermischen Strömungssensors auftritt. Ist der thermische Strömungssensor trotz des Defekts noch funktionsfähig, so weist dieser gegebenenfalls eine geänderte Sensorelementcharakteristik auf. In diesem Falle ist der thermische Strömungssensor beim Hersteller einzusenden, damit dieser den Schritt des Bestimmens der Kalibrierdaten wiederholen kann.

Gemäß einer vorteilhaften Ausgestaltung des erfindungsgemäßen Verfahrens ist vorgesehen, dass der thermische Strömungssensor für das Bestimmen der Kalibrierdaten mit einer Kalibrationseinrichtung verbunden wird, insbesondere temporär, wobei die Kalibrationseinrichtung eine Rohrleitung, bzw. einen Kanal, und ein Pumpelement aufweist, und wobei das Pumpelement eine Durchströmung der Rohrleitung, bzw. des Kanals, mit dem bekannten Messmedium mit dem definierten Wert der Strömungsgeschwindigkeit etabliert. Mittels dieser Kalibrationseinrichtung, welche insbesondere herstellerseitig vorgesehen ist, können definierte Zustände, bzw. Werte, der Strömungsgeschwindigkeit des bekannten Messmediums generiert werden, so dass die Kalibrierdaten des thermischen Strömungssensors hochgenau bestimmt werden können.

Gemäß einer vorteilhaften Ausgestaltung des erfindungsgemäßen Verfahrens ist vorgesehen, dass der thermische Strömungssensor für das Bestimmen der Isolinie und für das Durchführen der Strömungsmessung an eine mit dem Messmedium durchströmte Rohrleitung, bzw. einen Kanal, einer Messstelle angebracht wird. Die Bestimmung der Isolinie kann also vorteilhaft direkt am für den Betrieb des thermischen Strömungssensors vorgesehenen Einbauort geschehen und benötigt kein weiteres, spezielles Messequipment. Ein Ausbau des Sensors für einen eventuellen Wechsel des Messmediums oder für eine Überprüfung des Sensors und/oder des Messmediums entfällt somit komplett.

Gemäß einer vorteilhaften Ausgestaltung des erfindungsgemäßen Verfahrens ist vorgesehen, dass der Schritt des Erfassens der Maximalamplitude, bzw. der Phasenverschiebung periodisch wiederholt wird und wobei von der Elektronikeinheit eine Warnung erzeugt wird, wenn die jeweilig erfassten Maximalamplituden, bzw. Phasenverschiebungen untereinander um mehr als einen vorbestimmten Faktor voneinander abweichen. Der thermische Strömungssensor verfügt somit über eine Selbstüberprüfungsfunktion, bzw. ermöglicht eine vorausschauende Wartung, da Abweichungen von den regulären, bzw. bekannten Messwerten detektiert werden. Hierdurch kann dem Benutzer auch angezeigt werden, wann es - wie obig beschrieben - eine Änderung des Verhaltens zwischen dem thermischen Strömungssensor und dem Messmedium gibt und dass die Isolinie neu bestimmt werden sollte.

Des Weiteren wird die Aufgabe durch einen thermischer Strömungssensor gelöst, welcher dazu ausgestaltet ist, mittels des erfindungsgemäßen Verfahrens betrieben zu werden. Wesentlich für den thermischen Strömungssensor ist es, dass dieser sehr sensitiv ist und eine geringe Ansprechzeit aufweist - beispielsweise durch einen vereinfachten Schichtaufbau, was außerdem das mathematische Modell des thermischen Strömungssensors vereinfacht und die dazugehörigen Unsicherheiten verringert.

Die Erfindung wird anhand der nachfolgenden Figuren näher erläutert. Es zeigen

Fig. 1:  eine Übersicht über das erfindungsgemäße Verfahren;

Fig. 2:  einen Graphen, welcher Isolinien für verschiedene Werte von Messsignalen darstellt; und

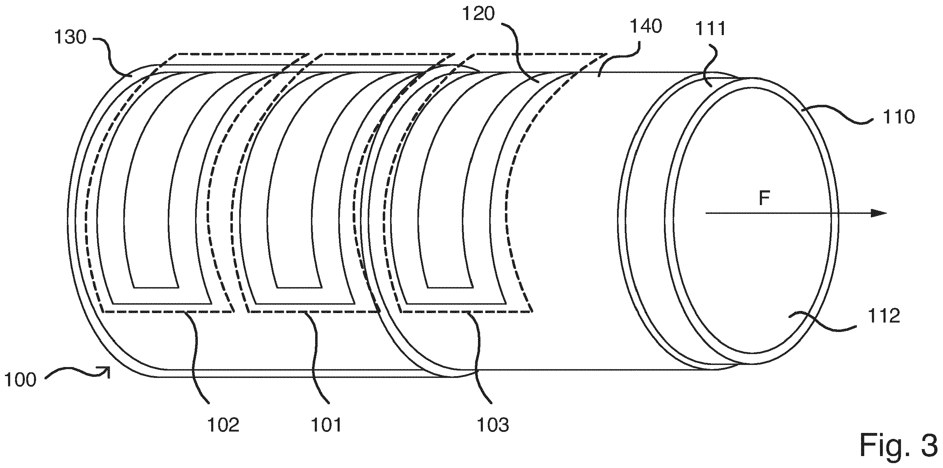

Fig. 3:  ein Ausführungsbeispiel eines erfindungsgemäßen thermischen Strömungssensors.

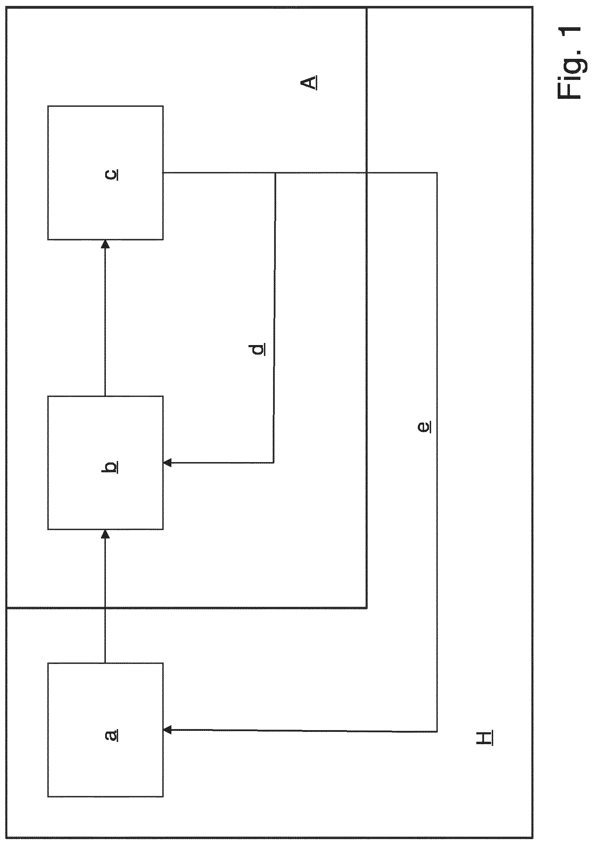

Fig. 1 zeigt ein Ablaufschema eines Ausführungsbeispiels des erfindungsgemäßen Verfahrens. Das Verfahren dient zum Kalibrieren eines thermischen Strömungssensors 100 auf ein zweites Messmedium 2 für eine Applikation eines Anwenders A.

Der erste Verfahrensschritt a wird seitens des Herstellers H oder seitens eines Kalibrierservices durchgeführt. Der thermische Strömungssensor 100 wird mit einer Kalibrationseinrichtung verbunden wird. Die Kalibrationseinrichtung weist eine Rohrleitung, bzw. einen Kanal, und ein Pumpelement auf. Das Pumpelement ist dazu ausgestaltet, eine Durchströmung der Rohrleitung, bzw. des Kanals, mit einem bekannten Messmedium mit einem definierten Wert einer Strömungsgeschwindigkeit zu etablieren. Die Zusammensetzung des ersten Messmediums und dessen thermische Parameter sind bekannt - beispielsweise handelt es sich um Wasser. Besonders relevant als thermische Parameter für das erfindungsgemäße Verfahren sind beispielsweise die Wärmeleitfähigkeit und die Wärmekapazität eines Messmediums.

Für die Erfassung von Kalibrierdaten wird eine Wechselstromuntersuchung des thermischen Strömungssensors 100 durchgeführt. Hierbei wird ein Wechselstromsignal an das Sensorelement 101, 102, 103 angelegt und gleichzeitig der Spannungsabfall über dem Sensorelement 101, 102, 103 erfasst. Hierbei wird eine Referenzmaximalamplitude eines Verlaufs der Temperatur und/oder einer Referenzphasenverschiebung zwischen dem Verlauf der Wechselspannung und dem Verlauf der Temperatur erfasst.

Diese Wechselstromuntersuchung kann beispielsweise über eine Lock-In-Methode realisiert werden.

Diese Kalibrierdaten werden in einer Elektronikeinheit des thermischen Strömungssensors 100 gespeichert. Anschließend wird der thermische Strömungssensor 100 aus der Kalibrationseinrichtung ausgebaut und an den Anwender A übergeben. Der Anwender A baut den thermischen Strömungssensor 100 anschließend in eine Messstelle ein, wo der thermische Strömungssensor 100 dem Zweck dient, die Strömungsgeschwindigkeit eines Messmediums 2 zu bestimmen, welches eine Rohrleitung, bzw. einen Kanal, der Messstelle durchströmt. Die thermischen Parameter des Messmediums 2 sind insbesondere nicht bekannt.

In einem zweiten Verfahrensschritt b wird das zweite Messmedium 2 charakterisiert. In diesem Beispiel handelt es sich bei dem zweiten Messmedium 2 um ein Öl unbekannter Zusammensetzung. Hierfür wird die sogenannte "3-Omega-Methode" verwendet, wobei die Strömungsgeschwindigkeit des zweiten Messmediums, während dieses Verfahrensschrittes b Null beträgt. Ein Sensorelement 101, 102, 103 des thermischen Strömungssensors 100 wird mit einer Wechselspannung, bzw. einem Wechselstrom periodisch angeregt und wirkt als Heizelement. Dadurch wird periodisch ein Wärmeimpuls in das zweite Messmedium 2 induziert. Gleichzeitig wird die Temperatur des Sensorelements ermittelt. Durch den Vergleich des Anregungssignals mit dem Temperatursignal, insbesondere deren dritter harmonischer Oberschwingung, können eine Maximalamplitude eines Verlaufs der Temperatur und/oder einer Phasenverschiebung zwischen dem Verlauf der Wechselspannung und dem Verlauf der Temperatur bestimmt werden. Anschließend erfolgt eine Anpassung dieser gemessenen Maximalamplitude, bzw. der gemessenen Phasenverschiebung, mittels den Kalibrierdaten.

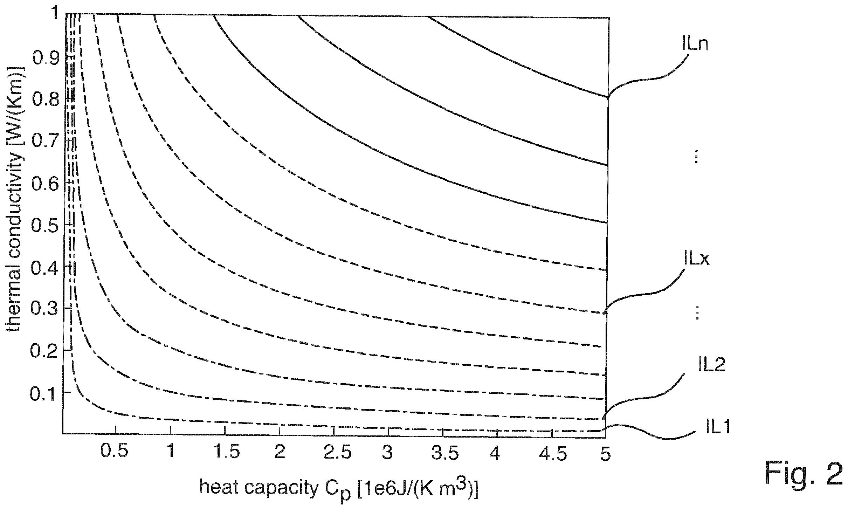

**Anschließend** wird anhand der angepassten Maximalamplitude, bzw. der angepassten Phasenverschiebung, eine Isolinie ILx bestimmt. In Fig. 2 ist ein Graph abgebildet, welche eine Vielzahl solcher Isolinien IL1, IL2, ..., ILx, ..., ILn für Flüssigkeiten darstellt. Für Gase, für welche das erfindungsgemäße Verfahren auch durchgeführt werden kann, sehen die Kurvenverläufe eventuell verschieden aus. Die x-Achse stellt hierbei die Wärmekapazität Cp dar, während die y-Achse die Wärmeleitfähigkeit k darstellt. Eine Isolinie IL1, IL2, ..., ILx, ..., ILn ist nun eine Vielzahl von Wertepaaren der Wärmekapazität Cp und der Wärmeleitfähigkeit k für welche die angepasste Maximalamplitude, bzw. die angepasste Phasenverschiebung denselben Wert annimmt. Die Isolinien IL1, IL2, ..., ILx, ..., ILn basieren auf einem mathematischen Modell $f(k, c_p)$ wobei $k$ die Wärmeleitfähigkeit und $C_p$ die Wärmekapazität bezeichnet. Zweck dieses Modells ist die Beschreibung des physikalischen Verhaltens der Temperatur bei einer periodischen Erwärmung. Dieses Modell basiert auf der Wärmeleitgleichung:

$$\frac{dT}{dt} - \frac{k}{\rho c_p} \Delta T = 0$$

, wobei $\rho$ die Dichte bezeichnet.

Mathematisch gesprochen ist eine Isoline (des ersten Modells) definiert als $\forall\ k,\ c_p |\ f(k,\ c_p)$ = const.

Für das vorliegende Beispiel wird angenommen, dass anhand der angepassten gemessenen Maximalamplitude, bzw. der gemessenen Phasenverschiebung die Isolinie ILx bestimmt wird.

Im Verfahrensschritt c wird die Isolinie IIx auf eine "Constant-Temperatur-Anemometry"-Strömungsmessung übertragen. Hierfür wird eine Messmediuminformation aus der Isolinie IIx herangezogen. Anschließend wird die Strömungsmessung mittels des thermischen Strömungssensors 100 durchgeführt. Hierbei liefert das Sensorelement 101, 102, 103 Signalwerte, welche Signalwerte in Messwerte der effektiven Strömungsgeschwindigkeit des Messmediums 2 mittels der Messfluidinformation umgewandelt werden.

Konkret wird hierfür ein zweites mathematisches Modell (für Constant-Temperatur-Anemometer) $g(k,\ c_p)$ verwendet. Zweck dieses Modells ist die Beschreibung der benötigten Energie/ Leistung bei der Constant-Temperature.-Anemometry. Dieses Modell basiert insbesondere auf der Energieerhaltung bei erzwungener Konvektion, welche wie folgt definiert ist:

$$\frac{dE}{dt} = \dot{m} c_p \left( T_{medium,out} - T_{medium,in} \right) = h(k, c_p) A \left( T_{heater} - T_{medium,in} \right),$$

wobei als E die gebrauchte Energie, $\dot{m}$ der Massenfluss, $T_{medium,in}$ die Temperatur des Mediums beim Erreichen des Heizers, $T_{medium,out}$ die Temperatur des Mediums nach dem Heizer und $T_{heater}$ die Temperatur des Heizers, h der Wärmeübergangskoeffizient und A die Querschnittsfläche des Kanals/Rohrs bezeichnet wird.

Das zweite Modell inkludiert ebenfalls eine Isoline, welche als $\forall\, k, c_p | g(k, c_p) = const$ definiert ist und als "weitere Isolinie" bezeichnet ist.

Die entscheidende Beobachtung, die experimentell festgestellt wurde, ist nun folgende:

$$\forall\, k, c_p \mid f(k, c_p) = const \;\rightarrow\; g(k, c_p) \cong const$$

Das $\cong$-Symbol soll die "Ähnlichkeit" der beiden Modelle f und g symbolisieren. Anhand der Gleichung 1 gibt es keinen Unterschied der Parameter $(k, c_p)$ zwischen der ersten Isoline ILx und der weiteren Isoline.

Der Verfahrensschritt d erlaubt es, den thermischen Strömungssensor auf ein verändertes Messmedium 2 oder beispielsweise bei einer Ablagerung auf einem der Sensorelemente 101, 102, 103 neu zu justieren. Hierfür werden die Verfahrensschritte b und c wiederholt und dadurch eine neue Isolinie ILx bestimmt. Es kann hierbei vorgesehen sein, die Maximalamplitude, bzw. die Phasenverschiebung, in regelmäßigen Zeitabständen neu zu bestimmen und auf Abweichungen zu untersuchen. Im Falle einer Abweichung kann dies dem Benutzer angezeigt werden, so dass dieser die weiteren Schritte initiiert. Alternativ kann das Durchführen der Verfahrensschritte b und c automatisch vorgenommen werden.

Der Verfahrensschritt e erlaubt es, den thermischen Strömungssensor 100 bei Auftreten eines Defekts, welcher die Messeigenschaften des thermischen Strömungssensors 100 zwar verändert, aber die Funktionsfähigkeit des thermischen Strömungssensors 100 nicht beeinträchtigt komplett neu zu charakterisieren und zu kalibrieren. Hierfür werden die Verfahrensschritte a bis c wiederholt, wobei der thermische Strömungssensor 100 zumindest zeitweise an den Hersteller H oder an einen Kalibrierservice übergeben wird.

Wesentlich für den verwendeten thermischen Strömungssensor ist es, dass dieser sehr sensitiv ist und eine geringe Ansprechzeit aufweist. Fig. 2 zeigt ein Ausführungsbeispiel eines solchen erfindungsgemäßen thermischen Strömungssensors 100. Fig. 2a zeigt eine isometrische Ansicht des thermischen Strömungssensors 100. Fig. 2b zeigt einen Querschnitt orthogonal zu einer Durchflussrichtung F des Messmediums 2 durch das Trägerelement 110 des thermischen Strömungssensors 100.

Als Trägerelement 110 wird ein Rohr verwendet, welches von einem Messmedium 2 in einer Flussrichtung F durchfließbar ist. Das Trägerelement 110 besteht aus einem metallischen Material, insbesondere Edelstahl, und weist beispielsweise eine Wandstärke von 150 $\mu$m auf.

Auf eine erste, dem Messmedium abgewandte, Oberfläche 111 des Trägerelements ist eine elektrische Isolationsschicht 140 mittels eines Dünnschichtverfahrens aufgetragen. Bei der elektrischen Isolationsschicht 140 handelt es sich in diesem Beispiel um ein keramisches Material, beispielsweise $Al_2O_3$, mit einer Schichtdicke von ca. 2 $\mu$m.

Auf die elektrische Isolationsschicht 140 wird anschließend eine funktionale Schicht 120 aus Platin aufgetragen. Die funktionale Schicht wird mittels eines Dünnschichtverfahrens, beispielsweise Sputtern oder Aufdampfen, aufgetragen und weist eine Schichtdicke von ca. 800 nm auf. Die elektrische Isolationsschicht dient der elektrischen Isolation zwischen der funktionalen Schicht 120 und dem Trägerelement. Die elektrische Isolationsschicht 140 und die funktionale Schicht 120 weisen im Wesentlichen dieselbe konvexe Krümmung auf wie die erste Oberfläche 111.

In einem anschließenden Verfahrensschritt wird die funktionale Schicht mittels eines Laserablationsverfahrens strukturiert. Hierbei trägt ein Laser das Material der funktionalen Schicht sukzessive ab, so die Strukturen von Sensorelementen 101, 102, 103 entstehen. Beispielsweise handelt es sich bei diesen Strukturen um Widerstandsstrukturen. Die Widerstandsstruktur dient dem Bestimmen der Temperatur des Messmediums. Dazu kann der Widerstandswert der Widerstandsstruktur gemessen werden. Der gemessene Widerstandswert ist ein direkt proportionales Maß für die an der Widerstandsstruktur anliegende Temperatur. Durch Anlegen einer elektrischen Spannung, bzw. eines elektrischen Stroms, an eine solche Widerstandsstruktur wird diese erhitzt, so dass ein Sensorelement 101 102, 103 auch als Heizelement dienen kann.

Ein anderes Verfahren zur Strukturierung der funktionalen Schicht stellt ein 3D-Lithografieverfahren dar. Der Vorteil des Verwendens des Laserablationsverfahrens gegenüber des 3D-Lithografieverfahrens liegt jedoch in geringerem Aufwand, resultierend in geringeren Kosten, und in erhöhter Umweltfreundlichkeit.

Anschließend wird eine Passivierungsschicht 130, insbesondere bestehend aus einem keramischen Material, auf der funktionalen Schicht 120 und auf der elektrischen Isolationsschicht 140 aufgetragen. Diese besitzt eine Schichtdicke von ca. 30 $\mu$m und dient dem Schutz der funktionalen Schicht 120 und der elektrischen Isolationsschicht 140 vor Umwelteinflüssen, beispielsweise Korrosion.

Eine alternative Ausgestaltung des Sensorelements 100 besteht in dem Verwenden eines nichtleitfähigen Materials für das Trägerelement 110. In diesem Fall kann auf die elektrisch isolierende Schicht 140 verzichtet werden, so dass es vorgesehen ist, die funktionale Schicht 10 direkt auf dem Trägerelement 110 aufzubringen.

Der thermische Strömungssensor weist zumindest ein Sensorelement 101 auf. In einem solchen Fall dient das Sensorelement 101 dem abwechselnden zeitweisen Erhitzen des Messmediums 2 und dem Bestimmen der Temperatur des Messmediums 2.

Es kann vorgesehen sein, zwei oder mehrere, insbesondere in Flussrichtung angeordnete, Sensorelemente 101, 102, 103 zu verwenden, wobei eines der Sensorelemente 101 als Heizelement ausgestaltet und mittig angeordnet ist und wobei jeweils eines der Sensorelemente 102, 103 als Temperatursensoren ausgestaltet sind und in Flussrichtung F aufwärts und in Flussrichtung F abwärts vom Heizelement angeordnet sind.

Ein solcher thermischer Strömungssensor 100 ist in den herkömmlichen bekannten Betriebsmodi "kalorimetrische Strömungsmessung", "anemometrische Strömungsmessung" und "Time-of-Flight-Strömungsmessung" betreibbar und weist neben den Sensorelementen 100 eine eine Elektronikeinheit auf, welche eine Steuereinheit und eine Auswerteeinheit umfasst, eine Spannungs-/Stromquelle und Verdrahtungen auf.

Kalorimetrische thermische Strömungssensoren 100 bestimmen über eine Temperaturdifferenz zwischen zwei Sensorelementen 102, 103 in Gestalt von Temperatursensoren, welche flussabwärts (engl. "downstream") und flussaufwärts (engl. "upstream") von einem als Heizelement ausgestalteten Sensorelement 101 angeordnet sind, den Durchfluss bzw. die Flussrate des Messmediums 2 in einem Kanal. Hierzu wird ausgenutzt, dass die Temperaturdifferenz bis zu einem gewissen Punkt linear zu dem Durchfluss bzw. der Flussrate ist. Dieses Verfahren bzw. die Methode ist in der einschlägigen Literatur ausgiebig beschrieben.

Anemometrische thermische Strömungssensoren bestehen 100 aus zumindest einem Sensorelement 101 in Gestalt eines Heizelements, welches während der Messung des Durchflusses erhitzt wird. Durch die Umströmung des Heizelements mit dem Messmedium 2 findet ein Wärmetransport in das Messmedium statt, der sich mit der Strömungsgeschwindigkeit verändert. Durch Messung der elektrischen Größen des Heizelements kann auf die Strömungsgeschwindigkeit des Messmediums geschlossen werden.

Strömungssensoren nach dem sogenannten "Time-of-Flight"-Messprinzip weisen zumindest ein Sensorelement 101 in Gestalt eines Heizelements und ein Sensorelement 102, 103 in Gestalt eines Temperatursensors auf. Durch das Heizelement wird ein kurzzeitiger Wärmeimpuls in das Messmedium 2 abgegeben, welcher einer lokale Erwärmung des Messmediums 2 verursacht. Das fließende Messmedium 2 verursacht eine Bewegung der lokalen Erwärmung entsprechend des vorliegenden Flusses. Gelangt die lokale Erwärmung in die Nähe des Temperatursensors, wird diese von dem Temperatursensor erfasst. Eine Auswerteeinheit bestimmt die Zeitdifferenz zwischen dem Induzieren des Wärmeimpulses und der Detektion der lokalen Erwärmung durch den Temperatursensor. Die Zeitdifferenz stellt ein Maß für die Strömungsgeschwindigkeit des Messmediums dar. Je niedriger die Zeitdifferenz ist, desto höher ist die vorliegende Strömungsgeschwindigkeit des Messmediums 2, und vice versa.

Anstatt der Ausgestaltung eines Sensorelements 101, 102, 103 als Heizelement kann dieses auch als Kühlelement, beispielsweise ein Peltierelement, ausgestaltet. Die obig beschriebenen Betriebsmodi sind unter Benutzung eines Kühlelements ebenfalls ausführbar, es wird hierbei ein Kühlimpuls in das Messmedium induziert.

Neben dieser konkreten Ausgestaltung eines thermischen Strömungssensors 100 versteht es sich für den Fachmann von selbst, dass beliebige weitere Ausgestaltungen und Typen von thermischen Strömungssensoren im Zusammenhang mit dem erfindungsgemäßen Verfahren verwendet werden können, so lange diese eine genügend hohe Sensitivität aufweisen. Beispielsweise kann ein Sensorelement 101, 102, 103, welches auf ein Substrat aufgebracht ist, mit dem Substrat auf das Trägerelement 110 gelötet sein, was ebenfalls eine hohe Sensitivität ermöglicht.

Bezugszeichenliste

| | |
|---|---|
| 100 | thermischer Strömungssensor |
| 101, 102, 103 | Sensorelemente |
| 110 | Trägerelement |
| 111 | erste Oberfläche |
| 112 | zweite Oberfläche |
| 120 | funktionale Schicht |
| 130 | Passivierungsschicht |
| 140 | elektrische Isolationsschicht |
| 2 | Messmedium |
| a, b, c, d, e | Verfahrensschritte |
| A | Anwender |
| $C_p$, k | thermische Parameter |
| H | Hersteller |
| IL1, IL2, ..., ILx, ..., ILn | Isolinien |

**EP 4 158 285 B1**

**Patentansprüche**

1. Verfahren zum Betreiben eines thermischen Strömungssensors (100), wobei der thermische Strömungssensor (100) zumindest ein Sensorelement (101, 102, 103) und eine Elektronikeinheit aufweist, umfassend:

   - In thermischen Kontakt Bringen eines Messmediums (2) mit dem Sensorelement (101, 102, 103) und periodisches Erwärmen des Messmediums (2) mittels einer in das Sensorelement (101, 102, 103) eingebrachten Wechselspannung, wobei simultan eine Maximalamplitude eines Verlaufs der Temperatur und/oder einer Phasenverschiebung zwischen dem Verlauf der Wechselspannung und dem Verlauf der Temperatur erfasst;
   - Anpassen der erfassten Maximalamplitude und/oder der erfassten Phasenverschiebung mithilfe von Kalibrierdaten;
   - Bestimmen einer Isolinie (ILx) anhand der angepassten Maximalamplitude und/oder der angepassten Phasenverschiebung auf Basis eines mathematischen, bzw. physikalischen, Modells des thermischen Strömungssensors (100), wobei die Isolinie (ILx) einer Vielzahl von Wertepaaren thermischer Parameter ($C_p$, k), insbesondere eine Wärmeleitfähigkeit und eine Wärmekapazität, des Messmediums (2) aufweist, welche Wertepaare mit derselben Maximalamplitude, bzw. derselben Phasenverschiebung, assoziiert sind;
   - Ableiten von zumindest einer Messfluidinformation aus der Isolinie (ILx); und
   - Durchführen einer Strömungsmessung mittels des thermischen Strömungssensors (100), wobei das Sensorelement (101, 102, 103) Signalwerte liefert, und Umwandeln der Signalwerte in Messwerte der effektiven Strömungsgeschwindigkeit des Messmediums (2) mittels der Messfluidinformation.

2. Verfahren nach Anspruch 1, wobei die Kalibrierdaten vorab mit einem bekannten Messmedium mit einem definierten Wertepaar thermischer Parameter ($C_p$, k), insbesondere Wasser, bestimmt werden, wobei das Bestimmen der Kalibrierdaten ein Erfassen einer Referenzmaximalamplitude eines Verlaufs der Temperatur und/oder einer Referenzphasenverschiebung zwischen dem Verlauf der Wechselspannung und dem Verlauf der Temperatur umfasst.

3. Verfahren nach zumindest einem der vorherigen Ansprüche, wobei für das Erfassen der Maximalamplitude und/oder der Phasenverschiebung und für das Bestimmen der Kalibrierdaten eine Strömungsgeschwindigkeit des Messmediums (2), bzw. des bekannten Messmediums, von Null vorliegt.

4. Verfahren nach zumindest einem der vorherigen Ansprüche, wobei die Kalibrierdaten in der Elektronikeinheit gespeichert werden.

5. Verfahren nach zumindest einem der vorherigen Ansprüche, wobei die Strömungsmessung mittels Constant-Temperature-Anemometry durchgeführt wird.

6. Verfahren nach zumindest einem der vorherigen Ansprüche, wobei die Schritte des Bestimmens der Isolinie (ILx) und das Ableiten der Messfluidinformation aus der Isolinie (ILx) wiederholt werden, im Falle, dass eine oder mehrere der folgenden Fälle eintreten:

   - Ein Wechsel, bzw. eine Änderung, des Messmediums (2);
   - Überprüfung des Sensorelements (101, 102, 103) bzgl. Verunreinigungen;
   - Veränderung der Zusammensetzung des Messmediums (2), insbesondere durch Zersetzung des Messmediums (2).

7. Verfahren nach zumindest einem der vorherigen Ansprüche, wobei die Schritte des Bestimmens der Kalibrierdaten, des Bestimmens der Isolinie (ILx) und des Ableitens der Messfluidinformation aus der Isolinie (ILx) wiederholt werden, im Falle, dass ein Defekt des thermischen Strömungssensors (100) auftritt.

8. Verfahren nach zumindest einem Ansprüche 2 bis 7, wobei der thermische Strömungssensor (100) für das Bestimmen der Kalibrierdaten mit einer Kalibrationseinrichtung verbunden wird, insbesondere temporär, wobei die Kalibrationseinrichtung eine Rohrleitung, bzw. einen Kanal, und ein Pumpelement aufweist, und wobei das Pumpelement eine Durchströmung der Rohrleitung, bzw. des Kanals, mit dem bekannten Messmedium mit einem definierten Wert einer Strömungsgeschwindigkeit etabliert.

9. Verfahren nach zumindest einem der vorherigen Ansprüche, wobei der thermische Strömungssensor (100) für das Bestimmen der Isolinie (ILx) und für das Durchführen der Strömungsmessung an eine mit dem Messmedium (2) durchströmte Rohrleitung, bzw. einen Kanal, einer Messstelle angebracht wird.

10. Verfahren nach zumindest einem der vorherigen Ansprüche, wobei der Schritt des Erfassens der Maximalamplitude, bzw. der Phasenverschiebung periodisch wiederholt wird und wobei von der Elektronikeinheit eine Warnung erzeugt wird, wenn die jeweilig erfassten Maximalamplituden, bzw. Phasenverschiebungen untereinander um mehr als einen vorbestimmten Faktor voneinander abweichen.

11. Thermischer Strömungssensor (100), welcher dazu ausgestaltet ist, mittels des Verfahrens nach zumindest einem der Ansprüche 1 bis 10 betrieben zu werden.


**Claims**

1. A method for operating a thermal flow sensor (100), wherein the thermal flow sensor (100) has at least one sensor element (101, 102, 103) and an electronic unit, comprising:

   - bringing a measuring medium (2) into thermal contact with the sensor element (101, 102, 103) and periodically heating the measuring medium (2) by means of an alternating voltage applied to the sensor element (101 , 102, 103) and simultaneously detecting a maximum amplitude of a temperature profile and/or a phase shift between the profile of the alternating voltage and the profile of the temperature;
   - adjusting the detected maximum amplitude and/or the detected phase shift with the aid of calibration data;
   - determining an isoline (ILx) using the adjusted maximum amplitude and/or the adjusted phase shift on the basis of a mathematical or physical model of the thermal flow sensor (100), the isoline (ILx) ) of a multiplicity of value pairs of thermal parameters ($C_p$, $k$), in particular a thermal conductivity and a heat capacity, of the measurement medium (2), which value pairs are associated with the same maximum amplitude or the same phase shift;
   - deriving at least one measurement fluid datum from the isoline (ILx); and

   carrying out a flow measurement by means of the thermal flow sensor (100), the sensor element (101, 102, 103) supplying signal values, and converting the signal values into measured values of the effective flow velocity of the measuring medium (2) by means of the measuring fluid information.

2. Method according to claim 1, wherein the calibration data are determined in advance with a known measuring medium with a defined pair of values of thermal parameters ($C_p$, $k$), in particular water, wherein the determination of the calibration data comprises detecting a reference maximum amplitude of a temperature profile and/or a reference phase shift between the alternating voltage profile and the temperature profile.

3. Method according to at least one of the previous claims, wherein a flow velocity of the measuring medium (2), or of the known measuring medium, is zero for detecting the maximum amplitude and/or the phase shift and for determining the calibration data.

4. Method according to at least one of the previous claims, wherein the calibration data are stored in the electronic unit.

5. method according to at least one of the previous claims, wherein the flow measurement is carried out by means of constant-temperature anemometry.

6. Method according to at least one of the previous claims, wherein the steps of determining the isoline (ILx) and deriving the measurement fluid information from the isoline (ILx) are repeated in the event that one or more of the following cases occurs:

   - a change or modification of the measuring medium (2);
   - checking the sensor element (101, 102, 103) for contamination;
   - change in the composition of the measuring medium (2), in particular due to decomposition of the measuring medium (2).

7. Method according to at least one of the previous claims, wherein the steps of determining the calibration data, determining the isoline (ILx) and deriving the measurement fluid information from the isoline (ILx) are repeated in the event that a defect occurs in the thermal flow sensor (100).

8. Method according to at least one of claims 2 to 7, wherein the thermal flow sensor (100) is connected to a calibration device, in particular temporarily, for determining the calibration data, wherein the calibration device device has a pipe or a channel and a pumping element, and the pumping element establishes a flow through the pipe or the channel with the known measuring medium at a defined flow rate.

9. Method according to at least one of the previous claims, wherein the thermal flow sensor (100) for determining the isoline (ILx) and for performing the flow measurement is attached to a pipe or duct through which the measuring medium (2) flows, at a measuring point.

10. Method according to at least one of the previous claims, wherein the step of detecting the maximum amplitude or the phase shift is repeated periodically and wherein a warning is generated by the electronic unit if the respective detected maximum amplitudes or phase shifts differ from one another by more than a predetermined factor.

11. Thermal flow sensor (100) which is designed to be operated by means of the method according to at least one of claims 1 to 10.

**Revendications**

1. **Procédé** de fonctionnement d'un capteur d'écoulement thermique (100), le capteur d'écoulement thermique (100) comprenant au moins un élément de capteur (101, 102, 103) et une unité électronique, comprenant :

   - Mise en contact thermique d'un milieu de mesure (2) avec l'élément de capteur (101, 102, 103) et chauffage périodique du milieu de mesure (2) au moyen d'une tension alternative introduite dans l'élément de capteur (101, 102, 103), une amplitude maximale d'une courbe de la température et/ou d'un déphasage entre la courbe de la tension alternative et la courbe de la température étant détectées simultanément ;
   - Ajuster l'amplitude maximale détectée et/ou le déphasage détecté à l'aide de données d'étalonnage ;
   - Déterminer une isoligne (ILx) à l'aide de l'amplitude maximale adaptée et/ou du déphasage adapté sur la base d'un modèle mathématique, respectivement physique, du capteur de flux thermique (100), l'isoligne (ILx) présentant une pluralité de paires de valeurs de paramètres thermiques ($c_p$, k), en particulier une conductivité thermique et une capacité thermique, du milieu de mesure (2), lesquelles paires de valeurs sont associées à la même amplitude maximale, respectivement au même déphasage ;
   - La déduction d'au moins une information de fluide de mesure à partir de l'isoligne (ILx) ; et
   - Effectuer une mesure d'écoulement au moyen du capteur d'écoulement thermique (100), l'élément de détection (101, 102, 103) fournissant des valeurs de signal, et convertir les valeurs de signal en valeurs de mesure de la vitesse d'écoulement effective du milieu de mesure (2) au moyen de l'information de fluide de mesure.

2. Procédé selon la revendication 1, dans lequel les données d'étalonnage sont déterminées au préalable avec un milieu de mesure connu ayant une paire définie de valeurs de paramètres thermiques ($c_p$, k), en particulier de l'eau, la détermination des données d'étalonnage comprenant une détection d'une amplitude maximale de référence d'une courbe de la température et/ou un déphasage de référence entre la courbe de la tension alternative et la courbe de la température.

3. Procédé selon au moins l'une des revendications précédentes, dans lequel, pour la détection de l'amplitude maximale et/ou du déphasage et pour la détermination des données d'étalonnage, on a une vitesse d'écoulement du milieu de mesure (2), ou du milieu de mesure connu, de zéro.

4. Procédé selon au moins l'une des revendications précédentes, dans lequel les données d'étalonnage sont stockées dans l'unité électronique.

5. Procédé selon au moins l'une des revendications précédentes, dans lequel la mesure de l'écoulement est effectuée par anémométrie à température constante.

6. Procédé selon au moins l'une des revendications précédentes, dans lequel les étapes de détermination de l'isoligne (ILx) et de dérivation des informations sur le fluide de mesure à partir de l'isoligne (ILx) sont répétées dans le cas où un ou plusieurs des cas suivants se produisent :

   - Un changement, respectivement une modification, du fluide de mesure (2) ;
   - Contrôle de l'élément de détection (101, 102, 103) en ce qui concerne les impuretés ;
   - Une modification de la composition du milieu de mesure (2), notamment par décomposition du milieu de mesure (2).

7. Procédé selon au moins l'une des revendications précédentes, dans lequel les étapes de détermination des données d'étalonnage, de détermination de l'isoligne (ILx) et de dérivation des informations sur le fluide de mesure à partir de l'isoligne (ILx) sont répétées dans le cas où un défaut du capteur de flux thermique (100) se produit.

8. Procédé selon au moins l'une des revendications 2 à 7, dans lequel le capteur d'écoulement thermique (100) est relié, en particulier temporairement, à un dispositif d'étalonnage pour la détermination des données d'étalonnage, le dispositif d'étalonnage comprenant une conduite, ou un canal, et un élément de pompage, et l'élément de pompage établissant un écoulement à travers la conduite, ou le canal, avec le fluide de mesure connu avec une valeur définie d'une vitesse d'écoulement.

9. Procédé selon au moins l'une des revendications précédentes, dans lequel le capteur d'écoulement thermique (100) est monté sur une conduite ou un canal d'un point de mesure traversé par le fluide de mesure (2) pour la détermination de l'isoligne (ILx) et pour la réalisation de la mesure d'écoulement.

10. Procédé selon au moins l'une des revendications précédentes, dans lequel l'étape de détection de l'amplitude maximale, respectivement du déphasage, est répétée périodiquement et dans lequel un avertissement est généré par l'unité électronique lorsque les amplitudes maximales, respectivement les déphasages, respectivement détectés diffèrent entre eux de plus d'un facteur prédéterminé.

11. Capteur de flux thermique (100), qui est conçu pour être exploité au moyen du procédé selon au moins l'une des revendications 1 à 10.

Fig. 1

Fig. 2

EP 4 158 285 B1

Fig. 3

**IN DER BESCHREIBUNG AUFGEFÜHRTE DOKUMENTE**

**In der Beschreibung aufgeführte Patentdokumente**

- EP 3106851 A1